# EUROPEAN PATENT APPLICATION

(11) **EP 4 585 520 A1**
(43) Date of publication of application: **16.07.2025**
(21) Application number: 25151071.5
(22) Date of filing: 09.01.2025
(51) Int. Cl.: B64D 47/02, B60Q 3/46, G08B 7/06, B64D 11/00

(54) **AIRCRAFT EMERGENCY EXIT GUIDANCE LIGHTING SYSTEM FOR ENHANCED PASSENGER SAFETY**

(30) Priority: 12.01.2024 IN 202441002499; 07.03.2024 US 202418598910
(71) Applicant: Goodrich Lighting Systems, Inc., Phoenix, AZ 85040-1169 (US)
(72) Inventor: PUTTASWAMAIAH, Bhaskara, 572214 Bangalore (IN); VEERABHADRAIAH, Yogish, 560079 Bangalore (IN)
(74) Representative: Dehns

(57) **Abstract**

An emergency lighting system is disclosed herein. The emergency lighting system includes an interior emergency light (320) disposed adjacent an exit door (314) and configured to illuminate the exit door, a plurality of floor lights (322) disposed in a row on a floor, the plurality of floor lights configured to illuminate an aisle, wherein each floor light of the plurality of floor lights is configured to be controlled individually and separately from the other plurality of floor lights, and a controller (502) operatively coupled to the interior emergency light and the plurality of floor lights and configured to activate the interior emergency light in response to an emergency and to activate each of the plurality of floor lights to indicate a direction to the exit door.

## Description

### CROSS-REFERENCE TO RELATED APPLICATIONS

This application claims priority to, and the benefit of, India Provisional Patent Application No. 202441002499, filed January 12, 2024 and titled "AIRCRAFT EMERGENCY EXIT GUIDANCE LIGHTING SYSTEM FOR ENHANCED PASSENGER SAFETY,".

### FIELD

The present disclosure generally relates to the field of aircraft and, more particularly, to aircraft emergency lighting systems

### BACKGROUND

Almost all aircraft have emergency lighting systems. For example, passenger aircraft have a number of emergency lights, such as emergency exit signs, light strips on the floor, emergency slide lights, and the like. These emergency lights are part of an emergency lighting system.

Conventional aircraft emergency lighting systems include one or more emergency power supplies. The emergency power supplies may be coupled to a trigger line, through which an emergency signal can be transmitted. This emergency signal triggers emergency operation of the emergency power supplies. Upon receiving this trigger signal, each of the emergency power supplies provides power to and activates various emergency lights, which light up.

### SUMMARY

Disclosed herein is an emergency lighting system including a interior emergency light disposed adjacent an exit door and configured to illuminate the exit door, a plurality of floor lights disposed in a row on a floor, the plurality of floor lights configured to illuminate an aisle, wherein each floor light of the plurality of floor lights is configured to be controlled individually and separately from the other plurality of floor lights, and a controller operatively coupled to the interior emergency light and the plurality of floor lights and configured to activate the interior emergency light in response to an emergency and to activate each of the plurality of floor lights to indicate a direction to the exit door.

In various embodiments, the emergency lighting system further includes a second interior emergency light disposed adjacent a second exit door and the controller is further configured to activate the second interior emergency light in response to the emergency, activate a first set of the plurality of floor lights to indicate the direction to the exit door, and activate a second set of the plurality of floor lights to indicate a second direction to the second exit door. In various embodiments, the emergency lighting system further includes a second interior emergency light including an indication of the direction to the exit door and the controller is further configured to activate the second interior emergency light in response to the emergency.

In various embodiments, the emergency lighting system further includes a sensor operatively coupled to the exit door and in communication with the controller, the sensor configured to provide an indication of a status of the exit door and the controller is further configured to receive the status from the sensor and activate each of the plurality of floor lights to indicate the direction to the exit door in response to the status indicating that the exit door is functional. In various embodiments, the controller is further configured to activate each of the plurality of floor lights to indicate a second direction to a second exit door in response to the status indicating that the exit door is non-functional.

In various embodiments, the emergency lighting system further includes a second sensor operatively coupled to an emergency slide and in communication with the controller, the sensor configured to provide an indication of a deployed status of the emergency slide and the controller is further configured to receive the deployed status from the sensor and activate each of the plurality of floor lights to indicate the direction to the exit door in response to the deployed status indicating that the emergency slide is deployed. In various embodiments, the controller is further configured to activate each of the plurality of floor lights to indicate a second direction to a second exit door in response to the deployed status indicating that the emergency slide is stowed.

Also disclosed herein is an aircraft including a first exit door, a first emergency light disposed adjacent the first exit door, a plurality of floor lights disposed along a floor and in a line toward the first exit door, a processor operatively coupled to the first emergency light and the plurality of floor lights, and a memory operatively coupled to the processor. The memory including the instructions stored thereon that, when executed by the processor, cause the processor to activate the first emergency light in response to an emergency and activate the plurality of floor lights in response to the emergency, wherein activating the plurality of floor lights includes an indication of a first direction toward the first exit door.

In various embodiments, the aircraft further includes a second exit door, the plurality of floor lights extends from the first exit door to the second exit door and a second emergency light disposed adjacent the second exit door and operatively coupled to the processor. The instructions, when executed by the processor, further cause the processor to activate the second emergency light in response to the emergency, activate a first subset of the plurality of floor lights to indicate the first direction toward the first exit door, and activate a second subset of the plurality of floor lights to indicate a second direction toward the second exit door. In various embodiments, the instructions, when executed by the processor, further cause the processor to deactivate the first emergency light in response to the first exit door being non-functional and activate the first subset of the plurality of floor lights to indicate the second direction toward the second exit door.

In various embodiments, the aircraft further includes a first sensor coupled to the first exit door and to the processor, the first sensor configured to provide a status of the first exit door. The instructions, when executed by the processor, further cause the processor to receive the status from the first sensor and deactivate the first emergency light in response to the status indicating that the first exit door is non-functional. In various embodiments, the aircraft further includes an emergency slide disposed adjacent the first exit door, a second sensor operatively coupled to the emergency slide and operatively coupled to the processor, the second sensor configured to provide a deployed status of the emergency slide and the instructions, when executed by the processor, further cause the processor to receive the deployed status from the second sensor and deactivate the first emergency light in response to the deployed status being undeployed.

In various embodiments, the instructions, when executed by the processor, further cause the processor to monitor the status received from the first sensor, monitor the deployed status received from the second sensor, and deactivate the first emergency light in response to a change in one of the status or the deployed status. In various embodiments, the aircraft further includes a second emergency light mounted to a ceiling of a cabin of the aircraft and operatively coupled to the processor, the second emergency light including a first arrow indicating the first direction to the first exit door and the instructions, when executed by the processor, further cause the processor to activate the second emergency light including the first arrow in response to the emergency.

Also disclosed herein is a method including receiving, by a processor, an indication of an emergency, activating, by the processor, a first emergency light adjacent a first exit door in response to the indication of the emergency, and activating, by the processor, a plurality of floor lights to indicate a first direction to the first exit door, the processor activating each of the plurality of floor lights sequentially to indicate the first direction.

In various embodiments, the method further includes activating, by the processor, a second emergency light adjacent a second exit door in response to the indication of the emergency, activating, by the processor, a first subset of the plurality of floor lights to indicate the first direction to the first exit door, and activating, by the processor, a second subset of the plurality of floor lights to indicate a second direction to the second exit door. In various embodiments, the method further includes activating, by the processor, a second emergency light in response to the emergency, the second emergency light including a first arrow indicating the first direction and a second arrow indicating a second direction, and activating, by the processor, the first arrow in response to the first exit door being functional.

In various embodiments, the method further includes receiving, by the processor, a status from a first sensor coupled to the first exit door, deactivating, by the processor, the first emergency light in response to the status being non-functional, and activating, by the processor, the plurality of floor lights to indicate a second direction to a second exit door in response to the status being non-functional. In various embodiments, the method further includes receiving, by the processor, a deployed status from a second sensor coupled to an emergency slide, the emergency slide being adjacent the first exit door, deactivating, by the processor, the first emergency light in response to the deployed status being stowed, and activating, by the processor, the plurality of floor lights to indicate a second direction to a second exit door in response to the deployed status being stowed.

In various embodiments, the method further includes receiving, by the processor, a second deployed status from the second sensor, the second deployed status being received after the deployed status, activating, by the processor, the first emergency light in response to the second deployed status being deployed, and activating, by the processor, the plurality of floor lights to indicate the first direction to the first exit door in response to the second deployed status being deployed.

The foregoing features and elements may be combined in any combination, without exclusivity, unless expressly indicated herein otherwise. These features and elements as well as the operation of the disclosed embodiments will become more apparent in light of the following description and accompanying drawings.

### BRIEF DESCRIPTION OF THE DRAWINGS

The subject matter of the present disclosure is particularly pointed out and distinctly claimed in the concluding portion of the specification. A more complete understanding of the present disclosure, however, may best be obtained by referring to the following detailed description and claims in connection with the following drawings. While the drawings illustrate various embodiments employing the principles described herein, the drawings do not limit the scope of the claims.
FIG. 1 illustrates an aircraft and a cabin, in accordance with various embodiments.
FIG. 2 illustrates a side view section of an aircraft cabin, in accordance with various embodiments.
FIG. 3A illustrates a top view of an aircraft cabin including an emergency lighting system, in accordance with various embodiments.
FIG. 3B illustrates a perspective view of an aircraft emergency lighting system, in accordance with various embodiments.
FIG. 3C illustrates an interior emergency light for an aircraft emergency lighting system, in accordance with various embodiments.
FIG. 4 illustrates a top view of an aircraft cabin including an emergency lighting system, in accordance with various embodiments.
FIG. 5 illustrates a functional schematic of an aircraft emergency lighting system, in accordance with various embodiments.
FIG. 6 illustrates a flow diagram of a method for dynamically controlling an aircraft emergency lighting system, in accordance with various embodiments.

### DETAILED DESCRIPTION

The following detailed description of various embodiments herein makes reference to the accompanying drawings, which show various embodiments by way of illustration. While these various embodiments are described in sufficient detail to enable those skilled in the art to practice the disclosure, it should be understood that other embodiments may be realized and that changes may be made without departing from the scope of the disclosure. Thus, the detailed description herein is presented for purposes of illustration only and not of limitation. The steps recited in any of the method or process descriptions may be executed in any order and are not necessarily limited to the order presented. Furthermore, any reference to singular includes plural embodiments, and any reference to more than one component or step may include a singular embodiment or step. Also, any reference to attached, fixed, connected, or the like may include permanent, removable, temporary, partial, full or any other possible attachment option. Additionally, any reference to without contact (or similar phrases) may also include reduced contact or minimal contact. It should also be understood that unless specifically stated otherwise, references to "a," "an" or "the" may include one or more than one and that reference to an item in the singular may also include the item in the plural. Further, all ranges may include upper and lower values and all ranges and ratio limits disclosed herein may be combined.

Emergency lighting systems are used on aircraft, other vehicles, and buildings. Existing aircraft emergency lighting system activate the emergency lights during evacuations to indicate the exits. In the event of an emergency, it is imperative for both crew members and passengers to quickly identify a safe exit. However, there may be situations in which one or more exits are unusable, as such as for example a door jam, a failure to deploy a slide, and/or a fire, among others. This leaves the passengers and crew with the daunting task of identifying the nearest operable emergency exit. Doing so may be time-consuming, anxiety-inducing process, and physical dangerous, particularly in high-stress, panic-inducing situations, such as an aircraft emergency.

Disclosed herein are systems and methods for emergency lighting that directs the crew and passengers to the nearest, operable exit. In various embodiments, light sources are strategically placed inside an aircraft. In various embodiments, the light sources include light emitting diode (LED) lights, LED panels, illuminated floor strips, illuminated signs, and/or light groupings. In various embodiments, the light sources may be placed in the aisle, on the floor, overhead compartments, and/or walls among others. In various embodiments, the light sources may be integrated with the other aircraft systems (e.g., door system, evacuation slide system, etc.). In various embodiments, the light sources may be configured to emit a directional light towards one or more operable emergency exits. In various embodiments, the systems and methods disclosed herein identify a nearest operable emergency exit and cause the light sources to signal a direction to the nearest operable emergency exit. In various embodiments, the light sources of an inoperable exit and/or adjacent to the inoperable exit may be disabled. In various embodiments, the light sources may be enabled in a sequential pattern to indicate a direction toward the nearest operable emergency exit.

In various embodiments, the emergency lighting system tends to enhance passenger safety by providing additional aids to quickly and safely locate an operable emergency exit. In various embodiments, the emergency lighting system tends to reduce congestion during an exit by providing a visible indication of a direction to move toward an operable exit. In various embodiments, the emergency lighting system may be automatically activated and updated in real time via communication with other systems on the aircraft.

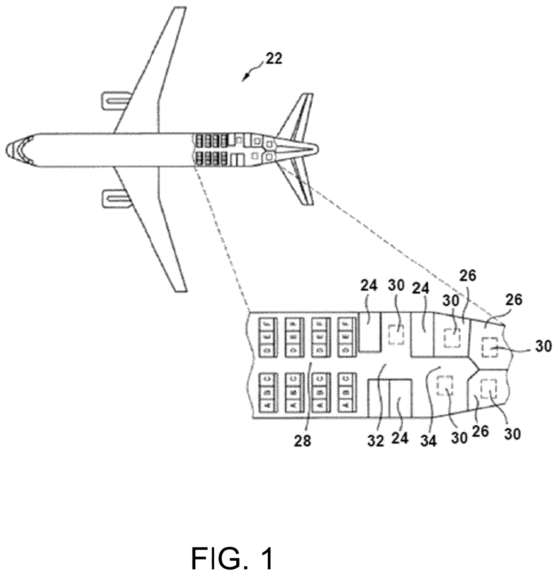

Referring now to FIG. 1, an aircraft 22 is illustrated, in accordance with various embodiments. While aircraft 22, which is a large commercial passenger airplane, is shown in a top view, a rear portion of aircraft 22 is depicted in a cut-open manner, in order to view the interior of aircraft 22. In the cut-open portion, a rear end of a seating portion 28 of the aircraft is depicted. In particular, the last four seating rows of seating portion 28 of aircraft 22 are shown. In general, the seats of aircraft 22 and the aisle(s) between the seats are considered seating portion 28 of aircraft 22. Aircraft 22 further includes galleys 24, washrooms 26, a gallery area 32, wash room waiting area 34, and aircraft cabin lighting 30. In various embodiments, aircraft cabin lighting 30 may include cabin lighting and/or emergency lighting. During normal operations, aircraft cabin lighting 30 may be activate and the emergency lighting may be active. During an emergency, the emergency lighting may be active and the aircraft cabin lighting 30 may be active or inactive. In various embodiments, the emergency lighting may be prioritized over aircraft cabin lighting 30. In various embodiments, aircraft cabin lighting 30 may be located in ceiling portions and/or on the walls of the aircraft cabin.

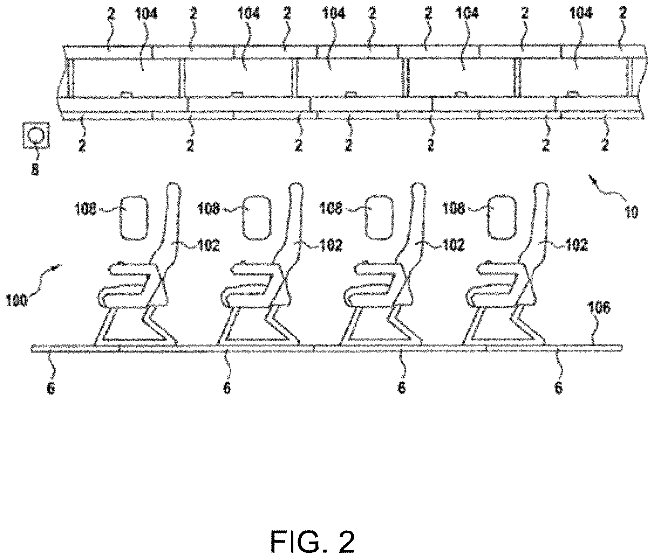

Referring now to FIG. 2, a section of an aircraft cabin 100 is illustrated, in accordance with various embodiments. Aircraft cabin 100 includes a plurality of passenger seats 102, a plurality of overhead baggage compartments 104, a floor 106, and a plurality of windows 108. Each window 108 may be adjacent a passenger seat 102. Aircraft cabin 100 further includes a lighting system 10 including a plurality of light units 2, a plurality of emergency lights 6, and an emergency light 8. In various embodiments, light units 2 are configured to provide illumination for aircraft cabin during normal operations. In various embodiments, the plurality of emergency lights 6 may be on floor 106 of aircraft cabin 100. In various embodiments, emergency light 8 may be on a wall or a ceiling of aircraft cabin 100. In various embodiments, one or more of the plurality of emergency lights 6 or emergency light 8 may be active during normal operations. In various embodiments, emergency light 8 may provide an indication of an exit from aircraft cabin 100. In various embodiments, the plurality of emergency lights 6 may provide illumination toward an exit from aircraft cabin 100.

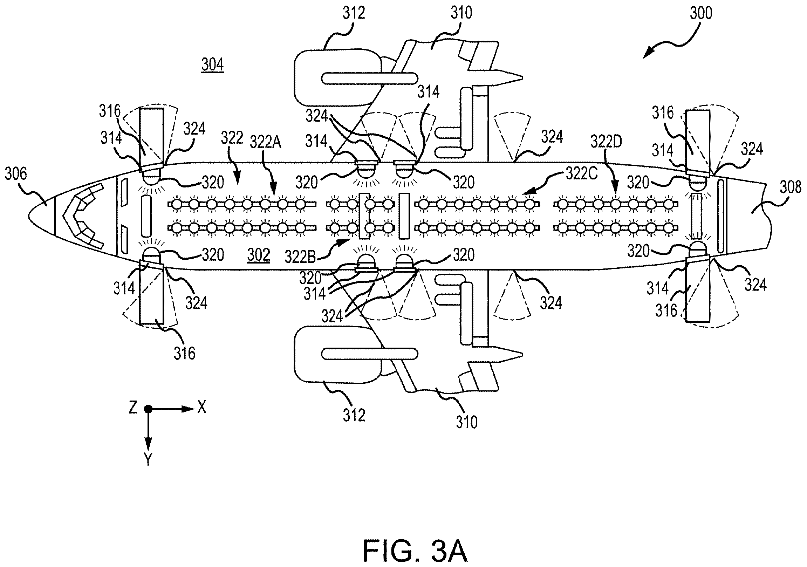

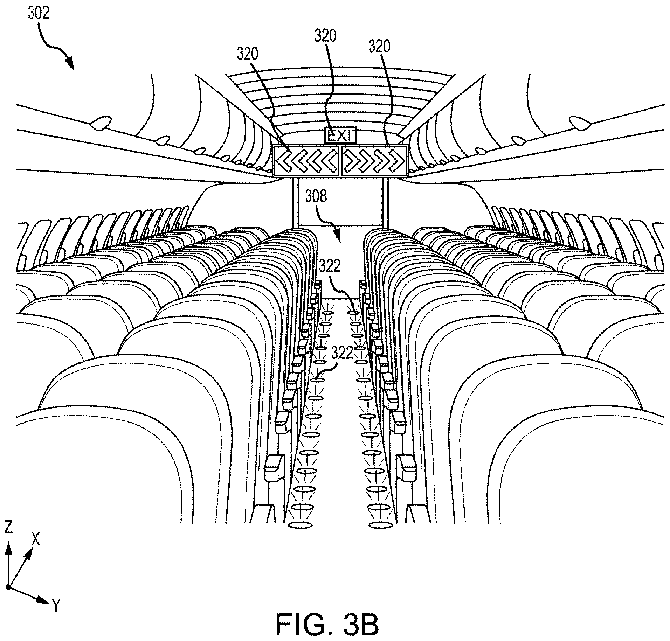

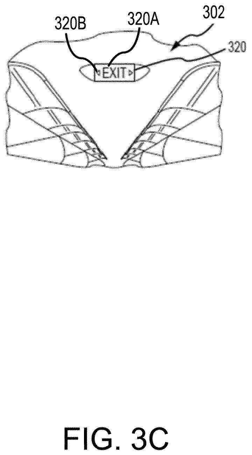

Referring now to FIGS. 3A-3C, an aircraft 300 is illustrated, in accordance with various embodiments. Aircraft 300 includes a cabin 302, and exterior 304, a forward end 306 (e.g., in the negative x-direction), an aft end 308 (e.g., in the positive x-direction), wings 310, and engines 312. Cabin 302 includes exit doors 314 that lead from cabin 302 to exterior 304 and emergency slides 316 that are coupled to aircraft 300 at exit doors 314. FIG. 3A illustrates a top down view of aircraft 300, FIG. 3B illustrates a perspective view of cabin 302 toward aft end 308, and FIG. 3C illustrates a perspective view of cabin 302 including a ceiling mounted emergency light. In various embodiments, aircraft 300 may be an example of aircraft 22 described above in FIG. 1. In various embodiments, cabin 302 may be an example of aircraft cabin 100 described above in FIG. 2.

In the illustrated embodiment, there are two exit doors 314 near forward end 306, one on either side of aircraft 300, two exit doors 314 over each wing 310, and two exit doors 314 near aft end 308, one on either side of aircraft 300. In the illustrated embodiment, each of the exit doors 314 near forward end 306 and aft end 308 are equipped with an emergency slide 316. It will be appreciated that the location of exit doors 314 and/or emergency slides 316 may vary between the same type of aircraft and between different types of aircraft based on the size of the aircraft, the layout of the aircraft, and/or the options selected for the aircraft, among others.

Aircraft 300 further includes a plurality of interior emergency lights 320, a plurality of floor lights 322, and a plurality of exterior emergency lights 324. The plurality of exterior emergency lights 324 may be mounted to exterior 304 of aircraft 300 to illuminate the various exit areas of aircraft 300 (i.e., adjacent exit doors 314). In various embodiments, the plurality of interior emergency lights 320 may be mounted on a ceiling or a wall of cabin 302. In various embodiments, one or more of the plurality of interior emergency lights 320 may be located above, or adjacent to, one or more exit doors 314. In various embodiments, one or more of the plurality of emergency lights 320 may indicate a direction to one or more exit doors 314. As illustrated in FIG. 3B, one interior emergency light 320 may include the word "EXIT" that is illuminated and one or more interior emergency lights 320 of the plurality of interior emergency lights 320 may include one or more arrows pointing toward one or more exit doors 314. As illustrated in FIG. 3C, one or more interior emergency lights 320 of the plurality of interior emergency lights 320 may include a word 320A "EXIT", that may be illuminated, and one or more arrows 320B adjacent word 320A that indicates a direction to toward one or more exit doors 314. Other embodiments are contemplated and it will be appreciated that these are examples for discussion purposes and are not intended to be limiting.

In various embodiments, the plurality of floor lights 322 may be separated into different groups 322A-322D. In various embodiments, each group 322A-322D may be controlled separately from each other group 322A-322D. In various embodiments, each floor light 322 may be controlled separately from each other floor light 322 of the plurality of floor lights 322. That is, each floor light 322 and/or group 322A-322D may be activated (i.e., turned on or illuminated) and/or deactivated (i.e., turned off) separately from each other floor light 322 of the plurality of floor lights 322 or each other group 322A-322D. In the illustrated embodiment, group 322A of floor lights 322 extends from exit doors 314 near forward end 306 (e.g., in the negative x-direction) to exit doors 314 over wings 310, group 322B extends between exit doors 314 over wings 310, group 322C extends from exit doors 314 over wings 310 to group 322D, and group 322D extends from group 322C to exit doors 314 near aft end 308. It will be appreciated that the plurality of floor lights 322 and groups 322A-322D are for illustrative and discussion purposes and are not intended to be limiting. More or fewer groups of floor lights 322 may be used in aircraft 300 and the groupings of floor lights 322 may vary in aircraft 300.

In an emergency situation (e.g., an unplanned landing, a fire, etc.), interior emergency lights 320 over exit doors 314 may be activated (i.e., turned on or illuminated) to indicate the location of exit doors 314 and the plurality of floor lights 322 may be activated (i.e., turned on or illuminated) to provide lighting along the floor of cabin 302. In various embodiments, the plurality of floor lights 322, and more specifically each group 322A-322D, may be activated to direct passengers and crew to exit door 314. In various embodiments, the indication may include activating and deactivating floor lights in each group 322A-322D so as to indicate a direction of movement toward exit door 314. In various embodiments, exit door 314 may be a nearest exit door 314, a preferred exit door 314, or a nearest active exit door 314, among others. In various embodiments, the plurality of floor lights 322 in each of groups 322A-322D may be controlled to indicate different directions based on the location of each floor light 322.

In some emergency situations, one or more exit doors 314 may be unusable, non-functional, or inoperative. This may be caused by damage to exit door 314, damage to emergency slide 316, damage to aircraft 300, fire, or defective equipment, among other reasons. In such situations, in various embodiments, one or more interior emergency lights 320 adjacent a non-functioning exit door 314 may be deactivated, or turned off and one or more of the plurality of floor lights 322, including groups 322A-322D, may be activated to indicate a direction toward a different exit door 314. For example, group 322A may initially indicate a first direction (e.g., the negative x-direction) toward exit doors 314 at forward end 306. Group 322A may then indicate a second direction (e.g., the positive x-direction) toward exit doors 314 over wings 310 in response to exit doors 314 at forward end 306 being non-functioning.

In various embodiments, each exit door 314 may include one or more sensors that provide a status of each exit door 314. In various embodiments, the status of exit door 314 may include functioning, non-functioning, closed, open, or other status indicators. In various embodiments, a sensor for exit door 314 providing a status of functioning or open may indicate that exit door 314 is available for use and the sensor for exit door 314 providing a status of non-functioning or closed may indicate that exit door 314 is not available for use. Interior emergency lights 320 and the plurality of floor lights 322 may be activated according to the status of each sensor.

In various embodiments, each emergency slide 316 may include one or more sensors that provide a status of each emergency slide 316. In various embodiments, the status of emergency slide 316 may include functioning, non-functioning, stowed, deployed, or other status indicators. In various embodiments, a sensor for emergency slide 316 providing a status of functioning or deployed may indicate that emergency slide 316 is available for use and the sensor for emergency slide 316 providing a status of non-functioning or stowed may indicate that emergency slide 316 is not available for use. In various embodiments, interior emergency lights 320 and the plurality of floor lights 322 may be activated according to the status of each sensor. In various embodiments, interior emergency lights 320 and the plurality of floor lights 322 may be activated according to a combination of the status of each sensor of exit door 314 and each sensor of emergency slide 316. For example, the sensor for exit door 314 may provide a status of functioning or open and the sensor for emergency slide 316 may provide a status of non-functioning or stowed resulting in a non-functioning exit. Accordingly, interior emergency lights 320 and the plurality of floor lights 322 may indicate a direction toward a functioning exit. As another example, the sensor for exit door 314 may provide a status of non-functioning or closed and the sensor for emergency slide 316 may provide a status of functioning or deployed resulting in a non-functioning exit. Accordingly, interior emergency lights 320 and the plurality of floor lights 322 may indicate a direction toward a functioning exit.

In various embodiments, the status of each sensor may be monitored during the emergency so that interior emergency lights 320 and the plurality of floor lights 322 may be updated to provide a nearest functioning exit door 314, a preferred exit door 314, or other exit door 314 based on different criteria.

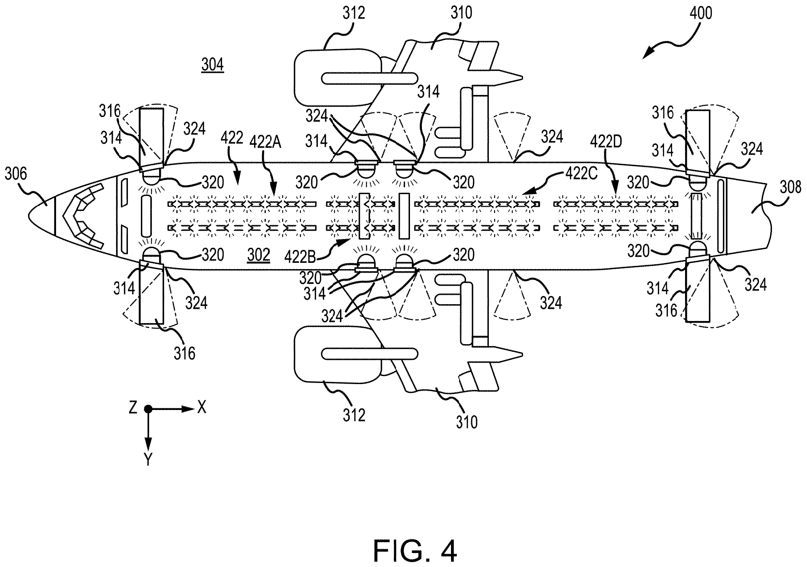

Referring now to FIG. 4, an aircraft 400 is illustrated, in accordance with various embodiments. Aircraft 400 is similar to aircraft 300 and includes similar lighting to aircraft 300 including a plurality of interior emergency lights 320 and a plurality of exterior emergency lights 324, descriptions of which will not be repeated below. Aircraft 400 also includes a plurality of floor lights 422. The plurality of floor lights 422 may operate similar to the plurality of floor lights 322 described above in FIGS. 3A-3C. In various embodiments, the plurality of floor lights 422 may separated into separate groups 422A-422D. In various embodiments, each floor light 422 may be controlled separately from each other floor light 422 of the plurality of floor lights 422. That is, each floor light 422 and/or group 422A-422D may be activated (i.e., turned on or illuminated) and/or deactivated (i.e., turned off) separately from each other floor light 422 of the plurality of floor lights 422 or each other group 422A-422D.

Each of the plurality of floor lights 422 includes a first direction light and a second direction light. The first direction light points toward forward end 306 of aircraft 400 (e.g., in the negative x-direction) and the second direction light points toward aft end 308 of aircraft 400 (e.g., in the positive x-direction). Group 422A of floor lights 422 includes a first row of floor lights 422 (e.g., in the negative y-direction) and a second row of floor lights 422 (e.g., in the positive y-direction). As illustrated in FIG. 4, the first row of floor lights 422 shows both the first direction light and the second direction light illuminated. This is for illustrative and discussion purposes to show that each floor light 422 includes both the first direction light and the second direction light. The second row of floor lights 422 illuminates a single direction light to point toward the nearest active exit door. For example, as illustrated in FIG. 4, the four forward most floor lights 422 in group 422A have the first direction light active and the second direction light inactive to indicate the nearest exit door 314 is toward forward end 306 of aircraft 400. Conversely, the four aft most floor lights 422 in group 422A have the first direction light inactive and the second direction light active to indicate the nearest exit door 314 is toward aft end 308 of aircraft 400.

As described above with respect to the plurality of floor lights 322, and in various embodiments, each of the plurality of floor lights 422 may be individually controlled to illuminate zero, one, or both direction lights to indicate a direction of travel. In various embodiments, each of the plurality of floor lights 422 may further be illuminated in sequence to provide a moving arrow toward the nearest emergency exit. In various embodiments, the first direction light and the second direction light of each of the plurality of floor lights 422 may be dynamically updated, as previously described, based on the condition of emergency exits 314 and aircraft 400.

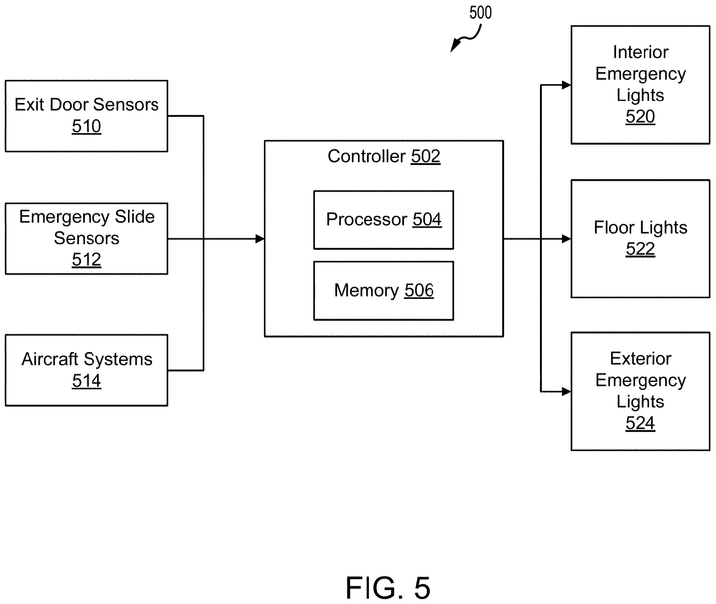

Referring now to FIG. 5, a diagram of a system 500 for controlling emergency lighting in an aircraft (e.g., aircraft 300) is illustrated, in accordance with various embodiments. System 500 includes a controller 502 that is operatively coupled to exit door sensors 510, emergency slide sensors 512, interior emergency lights 520, floor lights 522, and exterior emergency lights 524. In various embodiments, controller 502 may be operatively coupled to other aircraft systems 514 to receive information about the emergency and how to control interior emergency lights 520, floor lights 522, and exterior emergency lights 524. In various embodiments, exit door sensors 510 may be examples of the sensors for exit doors 314, emergency slide sensors 512 may be examples of the sensors for emergency slides 316, interior emergency lights 520 may be examples of interior emergency lights 320, floor lights 522 may be examples of the plurality of floor lights 322, and exterior emergency lights 524 may be examples of exterior emergency lights 324 described above in FIGS. 3A-3C.

Controller 502 further includes a processor 504 and a memory 506. Processor 504 may comprise one or more processors configured to implement various logical operations in response to execution of instructions, for example, instructions stored on a non-transitory, tangible, computer-readable medium. The one or more processors can be a processing chip, a general purpose processor, a microprocessor, a microcontroller, a digital signal processor (DSP), an application specific integrated circuit (ASIC), a field programmable gate array (FPGA) or other programmable logic device, discrete or transistor logic, discrete hardware components, or any combination thereof. Memory 506 may comprise memory to store data, executable instructions, system program instructions, and/or controller instructions to implement the control logic of processor 504.

Controller 502, and more specifically processor 504, receives one or more inputs from exit door sensors 510, emergency slide sensors 512, and/or other aircraft systems 514. The one or more inputs received may indicate at least one of an emergency status, a status of an exit door (e.g., exit door 314), or a status of an emergency slide (e.g., emergency slide 316). Controller 502 processes the one or more inputs and activates one or more of interior emergency lights 520, floor lights 522, or exterior emergency lights 524 based on the received input. In various embodiments, controller 502 may activate interior emergency lights 520 and floor lights 522 to provide an indication of an exit door, a preferred exit door, a nearest exit door, or a nearest functioning exit door. During the emergency event, controller 502 may continue receiving the one or more inputs from exit door sensors 510, emergency slide sensors 512, and/or other aircraft systems 514 and updating interior emergency lights 520 and floor lights 522 based on the one or more inputs. That is, each of interior emergency lights 520, floor lights 522, and exterior emergency lights 524 may be updated dynamically based on the current emergency situation in the aircraft (e.g., aircraft 300).

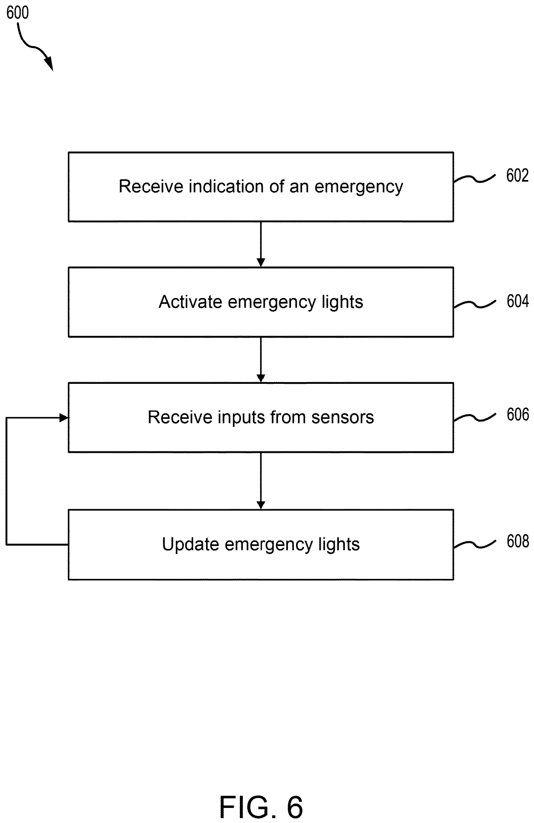

Referring now to FIG. 6, a flow diagram of a method 600 for dynamically activating emergency lighting in an aircraft is illustrated, in accordance with various embodiments. In various embodiments, the steps of method 600 may be performed by controller 402 or processor 404 described above in FIG. 4. At block 602, processor 404 receives an indication of an emergency.

At block 604, processor 404 activates emergency lights in response to the indication of the emergency. In various embodiments, processor 404 may activate one or more interior emergency lights 320 adjacent exit door 314. In various embodiments, processor 404 may active one or more exterior emergency lights 324. In various embodiments, processor 404 may activate one or more of the plurality of floor lights 322. In various embodiments, processor 404 may control the plurality of floor lights 322 individually or as a group to provide an indication of a direction of travel to an exit door 314. In various embodiments, processor 404 may control the plurality of floor lights 322 to indicate different directions to different exit doors 314 based on the location within cabin 302 of the floor light 322.

At block 606, processor 404 receives inputs from one or more sensors. In various embodiments, the one or more sensors may be coupled to an exit door 314 or an emergency slide 316, among others. In various embodiments, the inputs from the one or more sensors provides an indication of a status of each exit door 314 and/or emergency slide 316.

At block 608, processor 404 processes the one or more inputs and updates the emergency lights based on the one or more inputs. In various embodiments, processor 404 may deactivate one or more interior emergency lights 320 in response to a sensor indicating an adjacent exit door 314 is non-functioning. In various embodiments, processor 404 may activate the plurality of floor lights 322 to indicate a direction to a different exit door 314 in response to a sensor indicating an adjacent exit door 314 is non-functioning. In various embodiments, processor 404 may deactivate one or more interior emergency lights 320 in response to a sensor indicating an adjacent emergency slide 316 is non-functioning. In various embodiments, processor 404 may activate the plurality of floor lights 322 to indicate a direction to a different exit door 314 in response to a sensor indicating an adjacent emergency slide 316 is non-functioning. In various embodiments, processor 404 may activate interior emergency lights 320 and floor lights 322 in response to the sensor input from an exit door 314 and an adjacent emergency slide 316. Method 600 then returns to block 606 to continue monitoring the status of exit doors 314 and emergency slides 316 and dynamically updating emergency lights in response to the status.

System program instructions and/or controller instructions may be loaded onto a non-transitory, tangible computer-readable medium having instructions stored thereon that, in response to execution by a controller, cause the controller to perform various operations. The term "non-transitory" is to be understood to remove only propagating transitory signals per se from the claim scope and does not relinquish rights to all standard computer-readable media that are not only propagating transitory signals per se.

For example, the steps recited in any of the method or process descriptions may be executed in any order and are not limited to the order presented. Moreover, any of the functions or steps may be outsourced to or performed by one or more third parties. Modifications, additions, or omissions may be made to the systems, apparatuses, and methods described herein without departing from the scope of the disclosure. For example, the components of the systems and apparatuses may be integrated or separated. An individual component may be comprised of two or more smaller components that may provide a similar functionality as the individual component. Moreover, the operations of the systems and apparatuses disclosed herein may be performed by more, fewer, or other components and the methods described may include more, fewer, or other steps. Additionally, steps may be performed in any suitable order. As used in this document, "each" refers to each member of a set or each member of a subset of a set.

Furthermore, any reference to singular includes plural embodiments, and any reference to more than one component may include a singular embodiment. Use of 'a' or 'an' before a noun naming an object shall indicate that the phrase be construed to mean 'one or more' unless the context sufficiently indicates otherwise, as set forth in Slip op. at 8-9 (Fed. Cir. Oct. 19, 2023) (citing *Baldwin Graphic Sys.*, *Inc. v. Siebert*, *Inc.*, 512 F.3d 1338, 1342-43 (Fed. Cir. 2008)). For example, the description or claims may refer to a processor for convenience, but the invention and claim scope contemplates that the processor may be multiple processors. The multiple processors may handle separate tasks or combine to handle certain tasks. Although specific advantages have been enumerated herein, various embodiments may include some, none, or all of the enumerated advantages. A "processor" may include hardware that runs the computer program code. Specifically, the term 'processor' may be synonymous with terms like controller and computer and should be understood to encompass not only computers having different architectures such as single/multi-processor architectures and sequential (Von Neumann)/parallel architectures but also specialized circuits such as field-programmable gate arrays (FPGA), application specific circuits (ASIC), signal processing devices and other devices.

Benefits, other advantages, and solutions to problems have been described herein with regard to specific embodiments. Furthermore, the connecting lines shown in the various figures contained herein are intended to represent exemplary functional relationships and/or physical couplings between the various elements. It should be noted that many alternative or additional functional relationships or physical connections may be present in a practical system. However, the benefits, advantages, solutions to problems, and any elements that may cause any benefit, advantage, or solution to occur or become more pronounced are not to be construed as critical, required, or essential features or elements of the disclosure. The scope of the disclosure is accordingly to be limited by nothing other than the appended claims, in which reference to an element in the singular is not intended to mean "one and only one" unless explicitly so stated, but rather "one or more." Moreover, where a phrase similar to "at least one of A, B, or C" is used in the claims, it is intended that the phrase be interpreted to mean that A alone may be present in an embodiment, B alone may be present in an embodiment, C alone may be present in an embodiment, or that any combination of the elements A, B and C may be present in a single embodiment; for example, A and B, A and C, B and C, or A and B and C. Different cross-hatching is used throughout the figures to denote different parts but not necessarily to denote the same or different materials.

Systems, methods, and apparatus are provided herein. In the detailed description herein, references to "one embodiment," "an embodiment," "various embodiments," etc., indicate that the embodiment described may include a particular feature, structure, or characteristic, but every embodiment may not necessarily include the particular feature, structure, or characteristic. Moreover, such phrases are not necessarily referring to the same embodiment. Further, when a particular feature, structure, or characteristic is described in connection with an embodiment, it is submitted that it is within the knowledge of one skilled in the art to affect such feature, structure, or characteristic in connection with other embodiments whether or not explicitly described. After reading the description, it will be apparent to one skilled in the relevant art(s) how to implement the disclosure in alternative embodiments.

Numbers, percentages, or other values stated herein are intended to include that value, and also other values that are about or approximately equal to the stated value, as would be appreciated by one of ordinary skill in the art encompassed by various embodiments of the present disclosure. A stated value should therefore be interpreted broadly enough to encompass values that are at least close enough to the stated value to perform a desired function or achieve a desired result. The stated values include at least the variation to be expected in a suitable industrial process, and may include values that are within 5% of a stated value. Additionally, the terms "substantially," "about" or "approximately" as used herein represent an amount close to the stated amount that still performs a desired function or achieves a desired result. For example, the term "substantially," "about" or "approximately" may refer to an amount that is within 5% of a stated amount or value.

Furthermore, no element, component, or method step in the present disclosure is intended to be dedicated to the public regardless of whether the element, component, or method step is explicitly recited in the claims. As used herein, the terms "comprises," "comprising," or any other variation thereof, are intended to cover a non-exclusive inclusion, such that a process, method, article, or apparatus that comprises a list of elements does not include only those elements but may include other elements not expressly listed or inherent to such process, method, article, or apparatus.

Finally, it should be understood that any of the above-described concepts can be used alone or in combination with any or all of the other above-described concepts. Although various embodiments have been disclosed and described, one of ordinary skill in this art would recognize that certain modifications would come within the scope of this disclosure. Accordingly, the description is not intended to be exhaustive or to limit the principles described or illustrated herein to any precise form. Many modifications and variations are possible in light of the above teaching.

## Claims

1. An emergency lighting system, comprising:
an interior emergency light (320) disposed adjacent an exit door (314) and configured to illuminate the exit door;
a plurality of floor lights (322) disposed in a row on a floor, the plurality of floor lights configured to illuminate an aisle, wherein each floor light of the plurality of floor lights is configured to be controlled individually and separately from the other plurality of floor lights; and
a controller (502) operatively coupled to the interior emergency light and the plurality of floor lights and configured to activate the interior emergency light in response to an emergency and to activate each of the plurality of floor lights to indicate a direction to the exit door.

2. The emergency lighting system of claim 1,
further comprising:
a second interior emergency light (320) disposed adjacent a second exit door (314), wherein the controller (502) is further configured to activate the second interior emergency light in response to the emergency, activate a first set of the plurality of floor lights (322) to indicate the direction to the exit door, and activate a second set of the plurality of floor lights to indicate a second direction to the second exit door; or
further comprising:
a second interior emergency light (320) including an indication of the direction to the exit door (314),
wherein the controller (502) is further configured to activate the second interior emergency light in response to the emergency.

3. The emergency lighting system of claim 1 or 2, further comprising:
a sensor operatively coupled to the exit door (314) and in communication with the controller (502), the sensor configured to provide an indication of a status of the exit door,
wherein the controller is further configured to receive the status from the sensor and activate each of the plurality of floor lights (322) to indicate the direction to the exit door in response to the status indicating that the exit door is functional.

4. The emergency lighting system of claim 3, wherein the controller (502) is further configured to activate each of the plurality of floor lights (322) to indicate a second direction to a second exit door (314) in response to the status indicating that the exit door is non-functional.

5. The emergency lighting system of claim 3, further comprising:
a second sensor operatively coupled to an emergency slide (316) and in communication with the controller (502), the sensor configured to provide an indication of a deployed status of the emergency slide,
wherein the controller is further configured to receive the deployed status from the sensor and activate each of the plurality of floor lights (322) to indicate the direction to the exit door (314) in response to the deployed status indicating that the emergency slide is deployed; and optionally wherein the controller is further configured to activate each of the plurality of floor lights to indicate a second direction to a second exit door in response to the deployed status indicating that the emergency slide is stowed.

6. An aircraft, comprising:
a first exit door (314);
a first emergency light (320) disposed adjacent the first exit door;
a plurality of floor lights (322) disposed along a floor and in a line toward the first exit door;
a processor (504) operatively coupled to the first emergency light and the plurality of floor lights; and
a memory (506) operatively coupled to the processor, the memory comprising instructions stored thereon that, when executed by the processor, cause the processor to:
activate the first emergency light in response to an emergency; and
activate the plurality of floor lights in response to the emergency, wherein activating the plurality of floor lights includes an indication of a first direction toward the first exit door.

7. The aircraft of claim 6, further comprising:
a second exit door (314), wherein the plurality of floor lights (322) extends from the first exit door (314) to the second exit door; and
a second emergency light (320) disposed adjacent the second exit door and operatively coupled to the processor,
wherein the instructions, when executed by the processor (504), further cause the processor to:
activate the second emergency light in response to the emergency;
activate a first subset (322A-D) of the plurality of floor lights to indicate the first direction toward the first exit door; and
activate a second subset (322A-D) of the plurality of floor lights to indicate a second direction toward the second exit door; and optionally:
wherein the instructions, when executed by the processor, further cause the processor to:
deactivate the first emergency light in response to the first exit door being non-functional; and
activate the first subset of the plurality of floor lights to indicate the second direction toward the second exit door.

8. The aircraft of claim 6 or 7, further comprising:
a first sensor coupled to the first exit door (314) and to the processor (504), the first sensor configured to provide a status of the first exit door,
wherein the instructions, when executed by the processor, further cause the processor to:
receive the status from the first sensor; and
deactivate the first emergency light (320) in response to the status indicating that the first exit door is non-functional.

9. The aircraft of claim 8, further comprising:
an emergency slide (316) disposed adjacent the first exit door (314);
a second sensor operatively coupled to the emergency slide and operatively coupled to the processor (504), the second sensor configured to provide a deployed status of the emergency slide,
wherein the instructions, when executed by the processor, further cause the processor to:
receive the deployed status from the second sensor; and
deactivate the first emergency light in response to the deployed status being undeployed; and optionally:
wherein the instructions, when executed by the processor (504), further cause the processor to:
monitor the status received from the first sensor;
monitor the deployed status received from the second sensor; and
deactivate the first emergency light (320) in response to a change in one of the status or the deployed status.

10. The aircraft of claim 6, further comprising:
a second emergency light (320) mounted to a ceiling of a cabin of the aircraft and operatively coupled to the processor (504), the second emergency light including a first arrow indicating the first direction to the first exit door (314),
wherein the instructions, when executed by the processor (504), further cause the processor to:
activate the second emergency light including the first arrow in response to the emergency.

11. A method, comprising:
receiving, by a processor, an indication of an emergency;
activating, by the processor, a first emergency light adjacent a first exit door in response to the indication of the emergency; and
activating, by the processor, a plurality of floor lights to indicate a first direction to the first exit door, the processor activating each of the plurality of floor lights sequentially to indicate the first direction.

12. The method of claim 11, further comprising:
activating, by the processor, a second emergency light adjacent a second exit door in response to the indication of the emergency;
activating, by the processor, a first subset of the plurality of floor lights to indicate the first direction to the first exit door; and
activating, by the processor, a second subset of the plurality of floor lights to indicate a second direction to the second exit door.

13. The method of claim 11, further comprising:
activating, by the processor, a second emergency light in response to the emergency, the second emergency light including a first arrow indicating the first direction and a second arrow indicating a second direction; and
activating, by the processor, the first arrow in response to the first exit door being functional.

14. The method of claim 11, 12 or 13, further comprising:
receiving, by the processor, a status from a first sensor coupled to the first exit door;
deactivating, by the processor, the first emergency light in response to the status being non-functional; and
activating, by the processor, the plurality of floor lights to indicate a second direction to a second exit door in response to the status being non-functional.

15. The method of claim any of claims 11 to 14, further comprising:
receiving, by the processor, a deployed status from a second sensor coupled to an emergency slide, the emergency slide being adjacent the first exit door;
deactivating, by the processor, the first emergency light in response to the deployed status being stowed; and
activating, by the processor, the plurality of floor lights to indicate a second direction to a second exit door in response to the deployed status being stowed; and optionally further comprising:
receiving, by the processor, a second deployed status from the second sensor, the second deployed status being received after the deployed status;
activating, by the processor, the first emergency light in response to the second deployed status being deployed; and
activating, by the processor, the plurality of floor lights to indicate the first direction to the first exit door in response to the second deployed status being deployed.
